(19) Europäisches Patentamt
European Patent Office
Office européen des brevets

(11) **EP 3 296 701 B1**

(12) **EUROPÄISCHE PATENTSCHRIFT**

(45) Veröffentlichungstag und Bekanntmachung des Hinweises auf die Patenterteilung:
**18.11.2020 Patentblatt 2020/47**

(51) Int Cl.:
*G01D 5/244* *(2006.01)* *G01D 5/14* *(2006.01)*

(21) Anmeldenummer: **17180252.3**

(22) Anmeldetag: **07.07.2017**

(54) **SENSORVORRICHTUNG ZUR BESTIMMUNG DER POSITION DES ROTORS EINER ELEKTRISCHEN MASCHINE UND STEUERVORRICHTUNG FUER EINEN ELEKTROMOTOR**

SENSOR DEVICE FOR THE DETERMINATION OF THE POSITION OF THE ROTOR OF AN ELECTRIC MACHINE AND CONTROL DEVICE FOR AN ELECTRIC MOTOR

DISPOSITIF DE DÉTECTION DESTINÉ À DÉTERMINER LA POSITION DU ROTOR D'UNE MACHINE ÉLECTRIQUE ET ORGANE DE COMMANDE POUR UN MOTEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2016 CH 12072016**
**19.04.2017 EP 17167135**

(43) Veröffentlichungstag der Anmeldung:
**21.03.2018 Patentblatt 2018/12**

(73) Patentinhaber:
• **NM Numercial Modelling GmbH**
**6300 Zug (CH)**
• **maglab AG**
**4053 Basel (CH)**

(72) Erfinder: **ROOS, Markus**
**6340 Baar (CH)**

(74) Vertreter: **Falk, Urs**
**Patentanwaltsbüro Dr. Urs Falk**
**Eichholzweg 9A**
**6312 Steinhausen (CH)**

(56) Entgegenhaltungen:
**WO-A2-2013/057614    DE-A1- 10 034 733**
**US-A1- 2015 048 242**

**Beschreibung**

Die Erfindung betrifft eine Sensorvorrichtung zur Bestimmung der Position des Rotors einer elektrischen Maschine, die einen um eine Achse drehbaren Rotor und einen Stator umfasst, und eine Steuervorrichtung für eine derartige elektrische Maschine. Die elektrische Maschine kann beispielsweise ein Elektromotor oder ein elektrischer Generator sein.

Zur Bestimmung der Position des Rotors einer solchen elektrischen Maschine werden vielfach magnetische Systeme eingesetzt. Das magnetische System umfasst einen auf der Rotorachse montierten Permanentmagneten, der als Drehwinkelgeber wirkt, und wenigstens zwei Sensoren, die das von dem Drehwinkelgeber erzeugte Magnetfeld erfassen. Aus den Sensorsignalen wird die Winkelposition des Drehwinkelgebers bestimmt.

Als Permanentmagnete kommen sowohl Dipolmagnete als auch höhere Multipolmagnete zum Einsatz. Mit einem Dipolmagnet kann die absolute Position des Drehwinkelgebers bestimmt werden, was mit einem höheren Multipolmagneten nicht mehr der Fall ist. Dem Verlust der Information über die absolute Position steht bei höheren Multipolmagneten ein Gewinn an Auflösung gegenüber.

In einem Elektromotor wie auch in einem Generator sind inhärent Streu- und Störfeldquellen vorhanden, welche die Messgenauigkeit beeinträchtigen. Insbesondere bei einem Aufbau, bei dem die Sensoren im Bereich des von dem Stator erzeugten Magnetfeldes angeordnet sind, stellt der Stator aufgrund seiner Nähe zu dem Drehwinkelgeber eine starke Quelle von Störfeldern dar. In vielen Motortypen werden die Statorspulen mit Drehstrom betrieben, wodurch deren Magnetfeld ebenfalls eine Drehung um die Motorenachse ausführt.

Zur Leistungssteigerung werden Elektromotoren häufig nahe oder in der Sättigung des magnetischen Materials von Stator und/oder Rotor betrieben. Das führt zu Feldverzerrungen und erzeugt Sensorsignale mit Oberwellen, d.h. die Signale widerspiegeln nicht allein die Periodizität der Polteilung von Rotor und Stator als Funktion des Drehwinkels, sondern enthalten Überlagerungen von Vielfachen der entsprechenden Grundwellen. Diese Feldverzerrungen verringern die Genauigkeit signifikant oder verunmöglichen gar die Positionsbestimmung.

Elektromotoren finden breite Verwendungen in Märkten der Industrie-, Haushalt- und Automobil-Elektronik. Unter Elektromotoren fallen alle Ausführungen wie beispielsweise Flachmotoren, Synchronmotoren, Asynchronmotoren, Wechselstrommotoren und Schrittmotoren.

Ein Beispiel ist der Einsatz als Antriebsmotor von hybriden oder rein elektrischen Fahrzeugen. Um einen hohen Wirkungsrad und guten Fahrkomfort zu garantieren, muss die Rotorposition sehr genau gemessen werden können. Oft werden induktive oder optische Sensorsysteme für die Positionsdetektion eingesetzt, welche aber grossen Bauraum einnehmen und teuer sind.

Aus der US 2015/0048242 sind ein Verfahren und eine Vorrichtung zur Bestimmung der Winkelposition eines Drehwinkelgebers bekannt, die die Sensorsignale von Sensoren verarbeiten, um die Winkelposition des Drehwinkelgebers abzuschätzen. Ein Winkelpositionsschätzungsprozessor wendet eine erste Korrelationsrechnung auf gleichzeitig gesammelte Abtastwerte der Sensorsignale an, um erste Quadraturwerte zu erzeugen, wobei die erste Korrelationsrechnung variable Berechnungswerte verwendet, und wendet eine Winkelpositionsberechnung auf die ersten Quadraturwerte an, um die Winkelpositionsschätzung zu erzeugen. Eine Vor-Quadratur-Kalibrierschaltung wendet entsprechende zweite Korrelationsberechnungen auf entsprechende Abtastfolgen der Sensorsignale einzeln an, um zweite Quadraturwerte für jedes der Sensorsignale zu erzeugen, und wendet Winkelpositions- und/oder Grössenberechnungen auf die Sätze von zweiten Quadraturwerten an, um die variablen Berechnungswerte für die erste Korrelationsberechnung zu erzeugen, wodurch die Fehlerkomponente kompensiert und die Genauigkeit der geschätzten Winkelposition verbessert wird.

Aus der DE 10034733 ist ein Ermittlungsverfahren für ein Lagesignal und/oder für Korrekturwerte der Messsignale bekannt, bei dem die Messsignale zunächst massteilungsspezifisch in Amplitude und Phasenversatz korrigiert und ein Rohwinkel ermittelt werden. Der Restfehler des Rohwinkels wird über rohwinkelspezifische, massteilungsunabhängige Rohwinkelkorrekturwerte fein korrigiert und so ein Lagesignal ermittelt.

Die Korrekturwerte für Amplituden, Offsets und Phasenversatz werden durch Regression ermittelt, die Rohwinkelkorrekturwerte durch hochgenaue Referenzwinkelmessungen.

Der Erfindung liegt die Aufgabe zugrunde, eine kostengünstige Sensorvorrichtung zu entwickeln, die es ermöglicht, die Position des Rotors einer elektrischen Maschine mit hoher Genauigkeit zu bestimmen, auch wenn im Bereich der Sensoren Störfelder und/oder Feldverzerrungen vorhanden sind.

Die Erfindung betrifft einerseits eine Sensorvorrichtung zur Bestimmung einer Position des Rotors einer elektrischen Maschine, die einen um eine Achse drehbaren Rotor und einen Stator umfasst. Die Sensorvorrichtung umfasst eine Anzahl von r magnetischen Sensoren, die Sensorsignale $a_1$ bis $a_r$ liefern, und ist eingerichtet,

    die Sensorsignale $a_1$ bis $a_r$ zu erfassen, zu digitalisieren und einen Signalvektor $\vec{a} = (a_1,..., a_r)$ zu bilden,
    einen Messvektor $\vec{q}$ gemäss einer vorbestimmten linearen Funktion g zu $\vec{q} = g(\vec{a})$ zu bilden, wobei der Messvektor $\vec{q}$ eine Anzahl von n Komponenten aufweist, mit $2 \leq n \leq r$,

einen Vektor $\vec{p} = M_{rot1} \cdot \vec{q}$ zu berechnen, wobei $\vec{p}$ ein 2er-Vektor mit den Komponenten $p_1$ und $p_2$ und $M_{rot1}$ eine 2 x n Matrix ist, und

eine Position $\phi_1$ des Rotors zu bestimmen zu $\phi_1 = atan2(p_2, p_1)$.

Die Funktion $g(\vec{a})$ ist insbesondere eine der folgenden Funktionen:

*1)* $g(\vec{a}) = \vec{a}$,

2)

$$g(\vec{a}) = \vec{a} - \vec{a}_0,$$

3)

$$g(\vec{a}) = P \cdot \vec{a},$$

oder

4)

$$g(\vec{a}) = P \cdot (\vec{a} - \vec{a}_0),$$

wobei $\vec{a}_0$ einen Offsetvektor und P eine Projektionsmatrix bezeichnet, die unerwünschte Signalanteile heraus projiziert.

Die Sensorvorrichtung kann weiter eingerichtet sein,

einen Vektor $\vec{x} = M_{rot2} \cdot \vec{q}$ zu berechnen, wobei $\vec{x}$ ein 2er-Vektor mit den Komponenten $x_1$ und $x_2$ und $M_{rot2}$ eine 2 x n Matrix ist, und

eine weitere Position $\phi_2$ des Rotors zu bestimmen zu $\phi_2 = atan2(x_2, x_1)$.

Die Position $\phi_1$ oder die Position $\phi_2$ ist in der Regel eine absolute Position.

Die Sensorvorrichtung kann zusätzlich eingerichtet sein, eine Position $\psi$ des Statordrehfeldes der elektrischen Maschine zu bestimmen, wozu sie eingerichtet ist

einen Vektor $\vec{y} = M_{stat} \cdot \vec{q}$ zu berechnen, wobei $\vec{y}$ ein 2er-Vektor mit den Komponenten $y_1$ und $y_2$ und $M_{stat}$ eine 2 x n Matrix ist, und

die Position $\psi$ des Statordrehfeldes zu bestimmen zu $\psi = atan2(y_2, y_1)$.

Die Matrizen $M_{rot1}$, $M_{rot2}$ und $M_{stat}$ bilden die bei einer vollständigen Umdrehung des Rotors entstehende Bahn des Messvektors $\vec{q}$ auf je einen Kreis oder annähernd einen Kreis ab. Diese Abbildungen sind lineare Abbildungen. Die einem spezifischen Messvektor auf dem Kreis zugeordnete Position kann dann mittels der Arcustangensfunktion berechnet werden.

Die Anwendung der 2 x n Matrix $M_{rot1}$ auf den Messvektor $\vec{q}$ bewirkt, dass alle Signalanteile der Sensoren, die nicht von einem Magnetfeld stammen, das mit dem Rotor mitdreht und eine erste Rotationssymmetrie aufweist, eliminiert werden. Die Anwendung der 2 x n Matrix $M_{rot2}$ auf den Messvektor $\vec{q}$ bewirkt, dass alle Signalanteile der Sensoren, die nicht von einem Magnetfeld stammen, das mit dem Rotor mitdreht und eine zweite, von der ersten verschiedene Rotationssymmetrie aufweist, eliminiert werden. Die Anwendung der 2 x n Matrix $M_{stat}$ auf den Messvektor $\vec{q}$ bewirkt, dass alle Signalanteile der Sensoren, die nicht vom Stator erzeugt wurden, eliminiert werden, sofern die Rotationssymmetrie des vom Stator erzeugten Magnetfelds sowohl von der ersten als auch von der zweiten Rotationssymmetrie verschieden ist.

Die Matrizen $M_{rot1}$, $M_{rot2}$ und $M_{stat}$ können beispielsweise gemäss dem in der Schweizer Anmeldung Nr. 1207/16 und in der europäischen Anmeldung Nr. 17167135.7 beschriebenen Verfahren zur Bestimmung der Position eines Positionsgebers eines Positionsmesssystems, das im Rahmen der vorliegenden Anmeldung als COBROS Verfahren referenziert wird, bestimmt werden.

Gemäss einer Weiterbildung kann die erfindungsgemässe Sensorvorrichtung mit weiteren elektronischen Komponenten ergänzt werden, um eine Steuervorrichtung zu bilden, die eine präzise Steuerung eines Elektromotors ermöglicht.

Eine solche Steuervorrichtung umfasst zusätzlich zur Sensorvorrichtung einen Motorencontroller und eine Antriebseinheit. Die mit der Sensorvorrichtung ermittelte Position $\phi_1$ des Rotors wird dem Motorencontroller zugeführt. Der Motorencontroller generiert von der ersten Position $\phi_1$ abhängige Steuersignale für die Antriebseinheit und die Antriebseinheit erzeugt die Ströme für die Statorspulen des Elektromotors.

Die Steuervorrichtung kann auch eingerichtet sein, zusätzlich die mit der Sensorvorrichtung ermittelte Position $\psi$ des Statordrehfeldes des Elektromotors dem Motorencontroller zuzuführen, wobei in diesem Fall der Motorencontroller von den Positionen $\phi_1$ und $\psi$ abhängige Steuersignale für die Antriebseinheit generiert.

Die Erfindung wird nachfolgend anhand von Ausführungsbeispielen und anhand der Zeichnungen näher erläutert. Die Erfindung wird dabei anhand von Elektromotoren erläutert. Die folgenden Ausführungen gelten jedoch nicht nur für Elektromotoren, sondern für alle elektrischen Maschinen, die einen um eine Achse drehbaren Rotor und einen Stator umfassen, also beispielsweise auch elektrische Generatoren. Die magnetischen Sensoren sind im Folgenden meistens kurz als Sensoren bezeichnet.

Fig. 1 und 2    zeigen mit einer erfindungsgemässen Sensorvorrichtung ausgerüstete Elektromotoren,

Fig. 3    zeigt schematisch einen Elektromotor und eine erste Steuervorrichtung, und

Fig. 4    zeigt schematisch einen Elektromotor und eine zweite Steuervorrichtung.

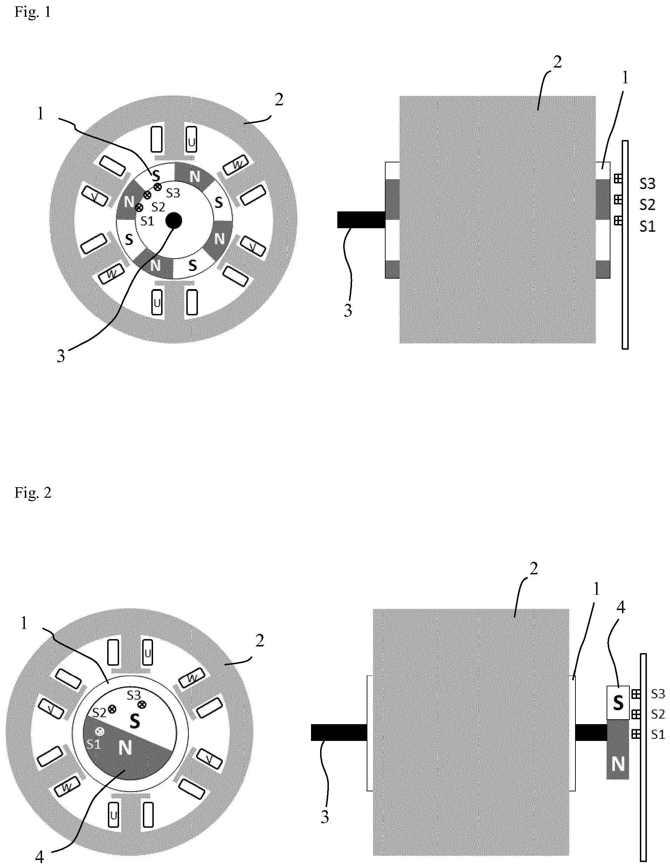

Die Fig. 1 und 2 zeigen Beispiele von Elektromotoren, die mit einer erfindungsgemässen Sensorvorrichtung ausgerüstet sind. Der Elektromotor umfasst einen um eine Achse 3 drehbaren Rotor 1 und einen Stator 2. Der Rotor 1 ist an einer Welle befestigt, die um die Achse 3 dreht. Die Sensorvorrichtung umfasst eine vorbestimmte Anzahl $r$ von magnetischen Sensoren, beispielsweise Hallelementen oder magnetoresistiven Sensoren wie z.B. AMR (Anisotropic MagnetoResistive), GMR (Giant MagnetoResistive) und TMR (Tunnel MagnetoResisitive) Sensoren. Die Anzahl $r$ der Sensoren hängt davon ab, welche Aufgaben die Sensorvorrichtung zu erfüllen hat. Aus Gründen der zeichnerischen Klarheit sind nur drei Sensoren S1, S2 und S3 dargestellt, obwohl die Anzahl $r$ der Sensoren auch zwei oder grösser als drei sein kann.

Die Fig. 1 und 2 zeigen - links im Querschnitt und rechts in Aufsicht - das Grundprinzip eines Synchronmotors bzw. eines Asynchronmotors. Bei dem Synchronmotor ist der Rotor 1 ein Permanentmagnet, bei dem Asynchronmotor ist der Rotor 1 ein passiver Läufer, der entweder ständig oder fallweise kurzgeschlossen wird, z.B. ein Käfigläufer. Die beiden Elektromotoren werden mit einem Drehstrom beaufschlagt, der eine vorbestimmte Anzahl von $n_{ph}$ Phasen hat. Die Anzahl der Phasen kann 2, 3 oder mehr sein. Der Stator 2 dieser Elektromotoren hat eine vorbestimmte Anzahl $n_{stat}$ von Spulentupeln. Jedes der Spulentupel umfasst eine Anzahl von $n_{ph}$ Spulen für die $n_{ph}$ Phasen des Drehstroms, so dass jeder Phase des Drehstroms eine Spule eines Spulentupels zugeordnet ist. Das Statordrehfeld ist invariant gegenüber Drehungen um $360°/n_{stat}$.

Die in den Fig. 1 und 2 gezeigten Elektromotoren sind ausgelegt für den Betrieb mit Dreiphasenwechselstrom, dessen Phasen mit U, V und W bezeichnet sind. Die Statoren 2 umfassen sechs Spulen, die alle den gleichen Wicklungssinn aufweisen. Die sechs Spulen bilden deshalb $n_{stat} = 2$ Spulentripel, d.h. die Spulentupel sind Spulentripel. Jedes der beiden Spulentripel umfasst drei Spulen, nämlich eine Spule für die Phase U, eine Spule für die Phase V und eine Spule für die Phase W. Das Statordrehfeld entspricht somit einem sich drehenden magnetischen Quadrupol.

Die sechs Spulen können alternativ einen unterschiedlichen Wicklungssinn aufweisen, nämlich U, V, W, -U, -V und -W, wobei das Minuszeichen den umgekehrten Wicklungssinn bezeichnet. In diesem Fall bilden die sechs Spulen ein einziges Spulentupel, d. h. es ist $n_{stat} = 1$. Das Statordrehfeld entspricht in diesem Fall einem sich drehenden magnetischen Dipol.

Die Elektromotoren können auch eine andere Anzahl von Spulen und andere Beschaltungen aufweisen.

Der Rotor 1 des in der Fig. 1 gezeigten Synchronmotors ist ein Permanentmagnet mit einer vorbestimmten Anzahl $n_{rot1}$ von Polpaaren, in dem gezeigten Beispiel ist $n_{rot1} = 4$. Zusätzlich kann ein Permanentmagnet 4 , insbesondere ein Dipolmagnet, an der Rotorwelle befestigt sein. Ein Dipolmagnet hat $n_{rot1} = 1$. Ein Multipolmagnet hat $n_{rot1} > 1$.

Bei einem Asynchronmotor ist an der Welle wenigstens ein Permanentmagnet 4 befestigt. Der Permanentmagnet 4 kann - wie in der Fig. 2 dargestellt ein Dipolmagnet - oder ein Multipolmagnet sein. Es können insbesondere zwei Permanentmagnete 4 vorgesehen sein, nämlich einer mit $n_{rot1} = 1$ und einer mit $n_{rot2} > 1$.

Damit ergibt sich: Der Rotor 1 und/oder ein oder zwei mit dem Rotor 1 mitdrehende Permanentmagnete erzeugen ein Magnetfeld, das einen Dipolcharakter, einen Multipolcharakter oder einen Dipolcharakter und einen Multipolcharakter hat. Das mit dem Rotor 1 mitdrehende Magnetfeld ist dementsprechend charakterisiert durch einen oder zwei Werte $n_{rot1}$, $n_{rot2}$, wobei $n_{rot1}$ (oder $n_{rot2}$) = 1 für das Dipolfeld und $n_{rot2}$ (oder $n_{rot1}$) > 1 für das Multipolfeld. Die durch die Statorspulen des Stators 2 fliessenden Ströme erzeugen ein Statordrehfeld, das ebenfalls um die Achse 3 rotiert. Grundsätzlich ist es so, dass das von dem Rotor 1 erzeugte Magnetfeld invariant ist gegenüber Drehungen um $360°/n_{rot1}$ (oder allenfalls $360°/n_{rot2}$) und das von dem Stator 2 erzeugte Magnetfeld invariant gegenüber Drehungen um $360°/n_{stat}$.

Ein mit dem Rotor 1 mitdrehendes Magnetfeld mit $n_{rot} = 1$ ermöglicht die Bestimmung der absoluten Position des Rotors 1, d.h. seiner Position innerhalb des vollen Winkelbereichs von 0-360°. Ein mit dem Rotor 1 mitdrehendes Magnetfeld mit $n_{rot} > 1$ ermöglicht die Bestimmung einer inkrementellen Position des Rotors 1, d.h. der entsprechende Positionswert im Intervall 0-360° wiederholt sich $n_{rot}$ Mal bei einer vollständigen Rotorumdrehung, so dass zwar Positionsänderungen des Rotors 1 detektiebar sind, aber nicht seine absolute Position. Hat das mit dem Rotor 1 mitdrehende Magnetfeld sowohl Dipolcharakter als auch Multipolcharakter, dann können mit der erfindungsgemässen Sensorvorrichtung sowohl die absolute Position als auch die inkrementelle Position des Rotors 1 bestimmt werden.

Die Sensoren sollen - als Nutzfeld - das von dem Rotor 1 und/oder das von dem mit dem Rotor 1 mitdrehenden Permanentmagneten erzeugte Magnetfeld erfassen, nicht aber die von dem Stator 2 erzeugten magnetischen Störfelder. Die Sensoren sind deshalb beim Elektromotor der Fig. 1 vorzugsweise stirnseitig auf der der Achse 3 zugewandten Seite, d.h. auf der Innenseite des Rotors 1, und beim Elektromotor der Fig. 2 bevorzugt auf der dem Stator 2 abgewandten Seite des Permanentmagneten 4 angeordnet, um den Signalanteil der von dem Stator 2 erzeugten magnetischen Störfelder zu minimieren. Die Sensoren sind mit Vorteil auf einem gemeinsamen Substrat, zum Beispiel einer Leiterplatte angeordnet.

Wenn die Sensoranordnung zur Steuerung eines Elektromotors ausgebildet ist, die auch das Statordrehfeld zur Steuerung benutzt, dann sollen die Sensoren, oder zumindest einige davon, auch das Statordrehfeld erfassen. Die Sensoren sind in diesem Fall mit Vorteil so angeordnet, dass die meisten sowohl das mit dem Rotor 1 mitdrehende als auch das mit dem Stator 2 mitdrehende Magnetfeld erfassen.

Sensorvorrichtung

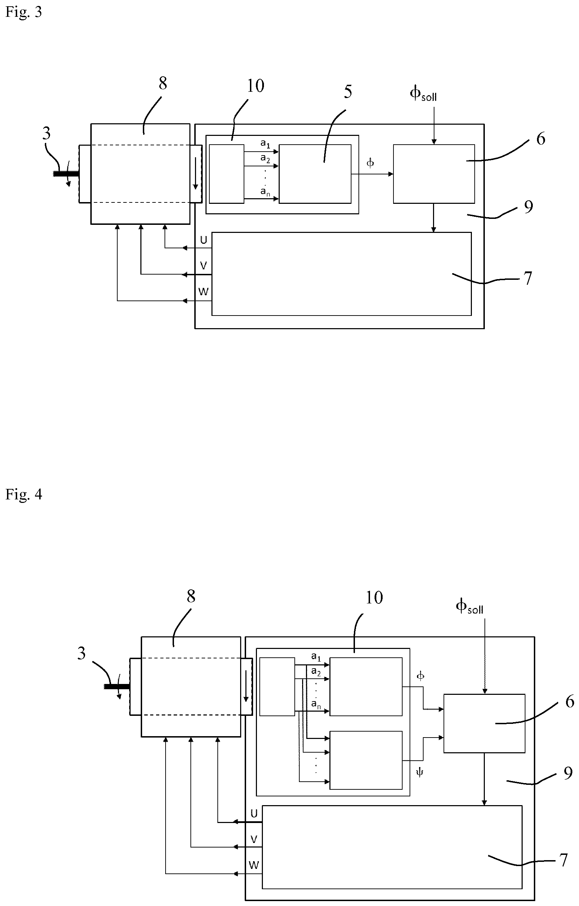

Die Sensorvorrichtung umfasst zusätzlich eine elektronische Schaltung 5 (Fig. 3) mit allen nötigen elektronischen Bauelementen, insbesondere A/D Wandler und Recheneinheit, die zum Betrieb der Sensoren und zur Auswertung der von den r Sensoren gelieferten Signale $a_1$ bis $a_r$ erforderlich sind. Die Bestimmung einer Position $\phi_1$ erfordert, wie nachfolgend ausgeführt, die Multiplikation einer Matrix $M_{rot1}$ mit einem aus den Sensorsignalen $a_1$ bis $a_r$ abgeleiteten Messvektor. Die Matrix $M_{rot1}$ ist in einem Speicher der elektronischen Schaltung 5 abgelegt. Falls zwei Positionen, zum Beispiel die absolute Position und eine inkrementelle Position, bestimmt werden sollen, sind dementsprechend zwei verschiedene Matrizen $M_{rot1}$ und $M_{rot2}$ im Speicher abgelegt.

Die Sensorvorrichtung ist eingerichtet,

die Sensorsignale $a_1$ bis $a_r$ zu erfassen, zu digitalisieren und einen Signalvektor $\vec{a}$ = $(a_1,..., a_r)$ zu bilden,
einen Messvektor $\vec{q}$ gemäss einer vorbestimmten linearen Funktion g zu $\vec{q}$ = $g(\vec{a})$ zu bilden, wobei der Messvektor $\vec{q}$ eine Anzahl von n Komponenten aufweist, mit $2 \leq n \leq r$,
einen Vektor $\vec{p} = M_{rot1} \cdot \vec{q}$ zu berechnen, wobei $\vec{p}$ ein 2er-Vektor mit den Komponenten $p_1$ und $p_2$ und $M_{rot1}$ eine 2 x n Matrix ist, und
eine erste Position $\phi_1$ zu bestimmen zu $\phi_1$ =atan2($p_2$, $p_1$).

Die Sensorvorrichtung kann weiter eingerichtet sein,

einen Vektor $\vec{x} = M_{rot2} \cdot \vec{q}$ zu berechnen, wobei $\vec{x}$ ein 2er-Vektor mit den Komponenten $x_1$ und $x_2$ und $M_{rot2}$ eine 2 x n Matrix ist, und
eine zweite Position $\phi_2$ zu bestimmen zu $\phi_2$ = atan2($x_2$, $x_1$).

Die Funktion $g(\vec{a})$ ist insbesondere eine der folgenden Funktionen:

1) $g(\vec{a}) = \vec{a},$

2)

$$g(\vec{a}) = \vec{a} - \vec{a}_0,$$

3)

$$g(\vec{a}) = P \cdot \vec{a},$$

oder

4)

$$g(\vec{a}) = P \cdot (\vec{a} - \vec{a}_0),$$

wobei $\vec{a}_0$ einen Offsetvektor und P eine Projektionsmatrix bezeichnet. Die Verwendung eines Offsetvektors ermöglicht die Korrektur allfälliger Offsets der Sensoren. Die Verwendung der Projektionsmatrix ermöglicht es, durch Störfelder bewirkte Signalanteile aus den Messwerten heraus zu projizieren. Die Funktion atan2($p_2$, $p_1$) entspricht der z.B. aus der Programmiersprache C bekannten Arcustangensfunktion.

Die Matrizen $M_{rot1}$ und $M_{rot2}$ hängen vom Multipolcharakter des mit dem Rotor 1 mitdrehenden Magnetfeldes, d.h. von dem Parameter $n_{rot1}$ bzw. $n_{rot2}$ ab. Mit einer Matrix $M_{rot1}$, die berechnet wurde mit $n_{rot1}$ = 1, ist die erste Position $\phi_1$ die absolute Position im Winkelbereich von 0-360°. Mit einer Matrix $M_{rot2}$, die berechnet wurde mit $n_{rot2}$ > 1, ist die zweite Position $\phi_2$ zwar auch eine Position im Winkelbereich von 0-360°, jedoch entspricht diese nicht der tatsächlichen absoluten Position des Rotors 1, da die gelieferte Position $\phi_2$ bei einer vollständigen Rotorumdrehung den Winkelbereich von 0-360° $n_{rot2}$ Mal durchläuft. Die zweite Position $\phi_2$ ist somit eine inkrementelle Position.

Die Matrizen $M_{rot1}$ und $M_{rot2}$ und gegebenenfalls die Projektionsmatrix P können beispielsweise mit dem COBROS Verfahren, wie es in den oben referenzierten und in diese Anmeldung integrierten Anmeldungen beschrieben ist, bestimmt werden. Soweit erforderlich, werden dazu weiter unten ergänzende Ausführungen gemacht.

Mit $n_{rot1}$ = 1 und $n_{rot2}$ > 1 ergibt die erste Position $\phi_1$ die absolute Position und die zweite Position $\phi_2$ die inkrementelle Position, wobei die Genauigkeit der inkrementellen Position in der Regel höher ist als die Genauigkeit der absoluten Position. Die absolute Position $\phi_1$ wird deshalb mit Vorteil aus der genaueren inkrementellen Position $\phi_2$ und der ungenaueren absoluten Position $\phi_1$ neu berechnet. Die Berechnung ist davon abhängig, in welchem Winkelbereich die inkrementelle Position $\phi_2$ geliefert wird. Die Funktion atan2() liefert immer Winkel im Bereich von 0-360°. Die Neuberechnung erfolgt dann beispielsweise zu $\phi_1 = \phi_2/n_{rot2} + \text{INT}(\phi_1 * n_{rot2}/360°) * 360°/n_{rot2}$, wobei die Funktion INT(x) den Ganzzahlanteil von x zurückgibt.

Der Einfluss des Statordrehfeldes auf die gemessene Position verschwindet, wenn die Rotationssymmetrie des Statordrehfeldes verschieden ist von der Rotationssymmetrie des Rotorfeldes. Dies ist dann der Fall, wenn $n_{stat} <> n_{rot1}$ und gegebenenfalls zusätzlich auch $n_{stat} <> n_{rot2}$. Damit in diesem Fall die absolute Position bestimmt werden kann, muss entweder $n_{stat} > 1$ sein oder es müssen die Sensoren so angeordnet sein, dass sie das Statordrehfeld möglichst nicht erfassen oder vom Statordrehfeld so weit als möglich abgeschirmt sind.

Der Einfluss des Statordrehfeldes auf die gemessene Position kann andererseits mithilfe einer Projektionsmatrix P und einer ausreichenden Anzahl r von Sensoren eliminiert werden.

Diese Prinzipien werden im Folgenden anhand einiger Ausführungsbeispiele näher erläutert.

Beispiel 1

Die Anzahl r der Sensoren ist r = 2. Die Anzahl $n_{stat}$ der Spulentupel des Stators 2 ist verschieden von der Anzahl $n_{rot1}$ der Polpaare des Rotors 1 gewählt, so dass das von dem Stator 2 erzeugte Drehfeld das Messergebnis nicht beeinflusst. Mit r = 2 Sensoren ist eine Offsetkorrektur und die Unterdrückung des Drehfeldes des Stators 2 möglich, jedoch keine Unterdrückung von äusseren magnetischen Störfeldern. Die Funktion $g(\vec{a})$ ist deshalb entweder $g(\vec{a}) = \vec{a}$ oder $g(\vec{a}) = \vec{a} - \vec{a}_0$.

Die Bestimmung der Matrix $M_{rot1}$ gemäss dem in den referenzierten Anmeldungen beschriebenen Verfahren erfordert die Berechnung einer Hilfsmatrix W mit den Matrixelementen $W_{ij}$

$$W_{ij} = \begin{cases} \sin(f\,e \cdot \frac{(\phi_{max} - \phi_{min})(j-1)}{m}), & i = 1 \\ \cos(f\,e \cdot \frac{(\phi_{max} - \phi_{min})(j-1)}{m}), & i = 2 \end{cases},$$

für j = 1 bis m,
wobei für den Parameter e die Anzahl der Polpaare des Rotors 1 einzusetzen ist, d. h. es ist $e = n_{rot1}$. Da der Winkelbereich 360° beträgt, vereinfacht sich dies zu

$$W_{ij} = \begin{cases} \sin(f\,n_{rot1} \cdot \frac{2\pi(j-1)}{m}), & i = 1 \\ \cos(f\,n_{rot1} \cdot \frac{2\pi(j-1)}{m}), & i = 2 \end{cases},$$

für j = 1 bis m,
Wenn das Magnetfeld sowohl Dipol- als auch Multipolcharakter hat und $n_{rot1} <> n_{stat}$ sowie $n_{rot2} <> n_{stat}$ ist, dann können sowohl die absolute Position als auch eine inkrementelle Position bestimmt werden. Die Bestimmung der Matrix $M_{rot2}$ erfolgt auf die gleiche Weise, wobei in der vorstehenden Formel $n_{rot1}$ durch $n_{rot2}$ zu ersetzen ist. Die mit der erfindungsgemässen Sensorvorrichtung berechnete Position $\phi_1$ oder $\phi_2$ des Rotors 1 erreicht bereits mit nur zwei Sensoren eine höhere Messgenauigkeit bzw. kleinere Winkelfehler als die mit der verbreiteten sin-cos-Auswertung berechnete Position.

Beispiel 2

Ein zusätzlicher Sensor ermöglicht die Unterdrückung eines Magnetfeldes, das eine beliebige räumliche Struktur aufweist.

Beispiel 3

Eine Anzahl m von zusätzlichen Sensoren ermöglichen beispielsweise die Unterdrückung von m voneinander unabhängigen externen Magnetfeldern, von denen jedes eine beliebige räumliche Struktur aufweist.

Beispiel 4

Zwei zusätzliche Sensoren ermöglichen die Unterdrückung des Statordrehfeldes beim Betrieb mit einem 3-Phasen-Drehstrom, solange die relative Phasenlage der drei Ströme 120° beträgt. Dieser Fall ist dann interessant, wenn die Anzahl $n_{stat}$ der Spulentupel des Stators 2 gleich der Anzahl $n_{rot}$ der Polpaare des Rotors 1 ist.

Beispiel 5

Drei zusätzliche Sensoren erlauben beispielsweise die Unterdrückung des Statordrehfeldes beim Betrieb mit einem 3-Phasen-Drehstrom, wenn die 3 Phasen beliebig angesteuert werden, d. h. nicht oder nur teilweise korreliert sind.

Die Unterdrückung des Statordrehfeldes erfolgt automatisch, wenn die Anzahl $n_{stat}$ der Spulentupel des Stators 2 und die Anzahl $n_{rot1}$ und gegebenenfalls $n_{rot2}$ der Polpaare des Rotors 1 verschieden sind. Die Unterdrückung des Statordrehfeldes kann jedoch auch mittels einer Projektionsmatrix P erfolgen, die beispielsweise mittels des in den referenzierten Anmeldungen beschriebenen Verfahrens bestimmt werden kann. Das Anlegen des Fremdfeldes bei der Bestimmung der Projektionsmatrix P erfolgt bei den Beispielen 4 und 5, indem bei dem Schritt 1.1 bzw. 1.3.1 des in den referenzierten Anmeldungen beschriebenen Verfahrens

a) zuerst die der ersten Phase des Drehstroms zugeordneten Statorspulen mit einem vorbestimmten Strom beaufschlagt werden,

b) und dann die der zweiten Phase des Drehstroms zugeordneten Statorspulen mit einem vorbestimmten Strom beaufschlagt werden,

c) und gegebenenfalls die der dritten Phase des Drehstroms zugeordneten Statorspulen mit einem vorbestimmten Strom beaufschlagt werden.

Wenn die Amplitude der durch die Statorspulen fliessenden Ströme eine gewisse Grenze überschreitet, dann treten im magnetischen Material des Stators 2 und/oder des Rotors 1 nicht-lineare magnetische Sättigungseffekte auf, die zu Oberwellen in den Sensorsignalen führen. Der störende Einfluss der Oberwellen auf die Rotorpositionsbestimmung kann dadurch eliminiert werden, dass mehr als r = 4 Sensoren verwendet werden.

## Steuervorrichtung für einen Elektromotor

Die Sensorvorrichtung kann mit weiteren elektronischen Komponenten ergänzt werden, um eine Steuervorrichtung für einen Elektromotor zu bilden. Die Steuervorrichtung kann je nach Anwendung eine absolute Position oder eine inkrementelle Position des Rotors zur Steuerung des Elektromotors verwenden. Im folgenden ist die verwendete Position mit $\phi$ bezeichnet. Die Position $\phi$ ist entweder die Position $\phi_1$ oder die Position $\phi_2$.

Die Steuervorrichtung kann beispielsweise eingerichtet sein, die Soll-Position $\phi_{soll}$ und die gemessene IstPosition $\phi$ zu verwenden, um die durch die Statorspulen des Stators 2 fliessenden Ströme zu steuern. Die Steuervorrichtung kann aber auch eingerichtet sein, zusätzlich zur Position $\phi$ des Rotors 1 auch die Position $\psi$ (= Drehlage bzw. Drehwinkel bzw. Drehstromphase) des Magnetfeldes zu erfassen, das von den durch die Statorspulen fliessenden Strömen erzeugt wird, was wiederum eine den tatsächlichen Positionen $\phi$ und $\psi$ entsprechende Steuerung der Statorströme ermöglicht. Dieses Magnetfeld wird im folgenden als Statordrehfeld bezeichnet. Dies ist möglich mit einer Anzahl von wenigstens 4 Sensoren, von denen zumindest einige derart angeordnet sind, dass sie auch das Statordrehfeld erfassen. Die erfindungsgemässen Steuervorrichtungen eignen sich für beliebige Elektromotoren, darunter auch Schrittmotoren oder drehzahlgeregelte Elektromotoren. Die Positionen $\phi$ und $\psi$ sind in der Regel dynamische, d.h. zeitabhängige Signale. Nachfolgend werden einige Beispiele beschrieben.

## Beispiel 6

Die Fig. 3 zeigt schematisch einen Elektromotor 8 und die Steuervorrichtung 9. Die Steuervorrichtung 9 umfasst eine Sensorvorrichtung 10 der oben beschriebenen Art, sowie einen Motorencontroller 6 und eine Antriebseinheit 7. Die mit der Sensorvorrichtung 10 ermittelte Position $\phi$ des Rotors 1 des Elektromotors wird dem Motorencontroller 6 zugeführt, der daraus Steuersignale für die Antriebseinheit 7 generiert. Die Antriebseinheit 7 erzeugt die Ströme für die Statorspulen des Elektromotors 8. Der Elektromotor 8 wird beispielsweise wie dargestellt mit einem 3-Phasen-Drehstrom betrieben. Die drei Ströme sind dementsprechend mit U, V und W bezeichnet. Die Ströme U, V und W sind zeitabhängig.

## Beispiel 7

Die Fig. 4 zeigt schematisch den Elektromotor 8 und eine Steuervorrichtung 9. Die Steuervorrichtung 9 umfasst wiederum eine Sensorvorrichtung 10 der oben beschriebenen Art, die zusätzlich eingerichtet ist, die Position $\psi$ des Statordrehfeldes zu erfassen, mit den Schritten:

Berechnen eines Vektors $\vec{y} = M_{stat} \cdot \vec{q}$, wobei $\vec{y}$ ein 2er-Vektor mit den Komponenten $y_1$ und $y_2$ und $M_{stat}$ eine 2 x n Matrix ist, und
Bestimmen der Position $\psi$ des Statordrehfeldes zu $\psi = atan2(y_2, y_1)$.

Die Matrix $M_{stat}$ kann beispielsweise ebenfalls gemäss dem oben referenzierten COBROS Verfahren bestimmt werden, wobei bei der Berechnung der Hilfsmatrix W die Anzahl $n_{stat}$ der Spulentupel des Stators 2 für den Parameter e einzusetzen ist. Die Elemente der Hilfsmatrix W sind also für die Bestimmung der Matrix $M_{stat}$ gegeben durch

$$W_{ij} = \begin{cases} \sin(f\, n_{stat} \cdot \frac{2\pi(j-1)}{m}), & i = 1 \\ \cos(f\, n_{stat} \cdot \frac{2\pi(j-1)}{m}), & i = 2 \end{cases},$$

für j = 1 bis m,
Wenigstens eine Position $\phi$ des Rotors 1, d.h. $\phi_1$, $\phi_2$, oder beide Positionen $\phi_1$ und $\phi_2$, und die ermittelte Position $\psi$ des Statordrehfeldes werden dem Motorencontroller 6 zugeführt, der daraus Steuersignale für die Antriebseinheit 7 generiert.

Die erfindungsgemässe Sensorvorrichtung zur Bestimmung der Position des Rotors und der Drehstromphase des Stators bietet mehrere Vorteile, darunter:

- eine hohe Integrationsdichte, d.h. den Aufbau einer platzsparenden Sensorvorrichtung; was auch auch den Bau von äusserst kompakten Flachmotoren ermöglicht,
- alle notwendigen Messsignale werden aus denselben Sensoren gewonnen,
- alle Messsignale werden für die Lösung aller Aufgaben (Elimination von Fremdfeldern, Bestimmung des Rotorpositionswinkels, Bestimmung des Drehstromphasenwinkels) verwendet,
- alle Verarbeitungsschritte laufen in derselben Architektur (FPGA, Mikroprozessor oder DSP) ab und weisen somit dieselben Verzögerungen oder allenfalls Verzerrungen auf. Damit ist garantiert, dass die Messwertqualität von Drehstromphase und Rotorposition unabhängig vom Betriebspunkt ist, an welchem der Motor betrieben wird. Zudem beziehen sich alle Messsignale auf exakt denselben Messzeitpunkt. Damit können sehr robuste Motorsysteme realisiert werden, beispielsweise um den Elektromotor am Betriebspunkt mit maximalem Drehmoment zu betreiben.

Während Ausführungsformen dieser Erfindung gezeigt und beschrieben wurden, ist es für den Fachmann ersichtlich, dass mehr Modifikationen als oben erwähnt möglich sind, ohne von dem erfinderischen Konzept abzuweichen. Die Erfindung ist daher nur durch die Ansprüche beschränkt.

**Patentansprüche**

1. Sensorvorrichtung zur Bestimmung einer ersten Position $\phi_1$ eines Rotors (1) einer elektrischen Maschine, wobei die elektrische Maschine den Rotor (1) und einen Stator (2) mit Statorspulen umfasst, wobei der Rotor (1) ein Permanentmagnet oder ein passiver Läufer ist, wobei der Permanentmagnet des Rotors (1) oder ein mit dem Rotor (1) mitdrehender Permanentmagnet (4) eine vorbestimmte Anzahl $n_{rot1}$ von Polpaaren aufweist, wobei die Sensorvorrichtung eine vorbestimmte Anzahl r von magnetischen Sensoren (S1, S2, S3), die das von dem Rotor (1) bzw. dem mit dem Rotor (1) mitdrehenden Permanentmagneten (4) erzeugte Magnetfeld erfassen, und eine elektronische Schaltung umfasst, wobei die elektronische Schaltung eingerichtet ist, die erste Position $\phi_1$ des Rotors (1) einzig mit den vier folgenden Schritten A-D zu bestimmen:

    A) die Sensorsignale $a_1$ bis $a_r$ zu erfassen, zu digitalisieren und einen Signalvektor $\vec{a}$ = ($a_1$,..., $a_r$) zu bilden,
    B) einen Messvektor $\vec{q}$ gemäss einer vorbestimmten linearen Funktion g zu $\vec{q} = g(\vec{a})$ zu bilden, wobei der Messvektor $\vec{q}$ eine Anzahl von n Komponenten aufweist, mit $2 \leq n \leq r$,
    C) einen Vektor $\vec{p} = M_{rot1} \cdot \vec{q}$ zu berechnen, wobei $\vec{p}$ ein 2er-Vektor mit den Komponenten $p_1$ und $p_2$ und $M_{rot1}$ eine 2 x n Matrix ist, wobei die Matrix $M_{rot1}$ von der Zahl $n_{rot1}$ abhängt, und
    D) die erste Position $\phi_1$ zu bestimmen zu $\phi_1$ =atan2($p_2$, $p_1$).

2. Sensorvorrichtung nach Anspruch 1, die weiter eingerichtet ist

    einen Vektor $\vec{x} = M_{rot2} \cdot \vec{q}$ zu berechnen, wobei $\vec{x}$ ein 2er-Vektor mit den Komponenten $x_1$ und $x_2$ und $M_{rot2}$ eine 2 x n Matrix ist, und
    eine zweite Position $\phi_2$ zu bestimmen zu $\phi_2$ =atan2($x_2$, $x_1$).

3. Sensorvorrichtung nach Anspruch 2, wobei die erste Position $\phi_1$ eine absolute Position ist und die Sensorvorrichtung weiter eingerichtet ist, die erste Position $\phi_1$ aus den Positionen $\phi_1$ und $\phi_2$ neu zu bestimmen, um die absolute Position $\phi_1$ mit einer höheren Genauigkeit zu erhalten.

4. Sensorvorrichtung nach Anspruch 2, wobei die zweite Position $\phi_2$ eine absolute Position ist und die Sensorverrichtung weiter eingerichtet ist, die zweite Position $\phi_2$ aus den Positionen $\phi_1$ und $\phi_2$ neu zu bestimmen, um die absolute Position $\phi_2$ mit einer höheren Genauigkeit zu erhalten.

5. Sensorvorrichtung nach einem der Ansprüche 1 bis 4, **dadurch gekennzeichnet, dass** die Funktion $g(\vec{a})$ eine der folgenden Funktionen ist:

    1) $g(\vec{a}) = \vec{a}$,
    2)

$$g(\vec{a}) = \vec{a} - \vec{a}_0,$$

    3)

$$g(\vec{a}) = P \cdot \vec{a},$$

    oder
    4)

$$g(\vec{a}) = P \cdot (\vec{a} - \vec{a}_0),$$

wobei $\vec{a}_0$ einen Offsetvektor und P eine Projektionsmatrix bezeichnet.

6. Sensorvorrichtung nach einem der Ansprüche 1 bis 5, **dadurch gekennzeichnet, dass** die elektrische Maschine ein Synchron-, Asynchron-, Wechselstrom- oder Schrittmotor oder ein Generator ist.

7. Sensorvorrichtung nach einem der Ansprüche 1 bis 6, **dadurch gekennzeichnet, dass** die elektrische Maschine ein Flachmotor ist.

8. Sensorvorrichtung nach einem der Ansprüche 1 bis 7, **dadurch gekennzeichnet, dass** die magnetischen Sensoren Hallsensoren oder magnetoresistive Sensoren (AMR, GMR, TMR) sind und auf einem gemeinsamen Substrat angeordnet sind.

9. Sensorvorrichtung nach einem der Ansprüche 1 bis 8, wobei die Sensorvorrichtung zusätzlich eingerichtet ist, eine Position $\psi$ des Statordrehfeldes der elektrischen Maschine zu bestimmen, wozu sie einge-

richtet ist

einen Vektor $\vec{y} = M_{stat} \cdot \vec{q}$ zu berechnen, wobei $\vec{y}$ ein 2er-Vektor mit den Komponenten $y_1$ und $y_2$ und $M_{stat}$ eine 2 x n Matrix ist, und die Position $\psi$ des Statordrehfeldes zu bestimmen zu $\psi = \text{atan2}(y_2, y_1)$.

10. Steuervorrichtung für einen Elektromotor (8), der einen Rotor (1) und einen Stator (2) umfasst, umfassend
eine Sensorvorrichtung (10) nach einem der Ansprüche 1 bis 8,
einen Motorencontroller (6), und
eine Antriebseinheit (7), wobei
die mit der Sensorvorrichtung (10) ermittelte erste Position $\phi_1$ des Rotors (1) des Elektromotors (8) dem Motorencontroller (6) zugeführt wird,
der Motorencontroller (6) von der ersten Position $\phi_1$ abhängige Steuersignale für die Antriebseinheit (7) generiert, und
die Antriebseinheit (7) Ströme für die Statorspulen des Elektromotors (8) erzeugt.

11. Steuervorrichtung für einen Elektromotor (8), der einen Rotor (1) und einen Stator (2) umfasst, umfassend
eine Sensorvorrichtung nach Anspruch 9,
einen Motorencontroller (6), und
eine Antriebseinheit (7), wobei
die mit der Sensorvorrichtung ermittelte erste Position $\phi_1$ des Rotors und die Position $\psi$ des Statordrehfeldes des Elektromotors (8) dem Motorencontroller (6) zugeführt werden, der Motorencontroller (6) von den Positionen $\phi_1$ und $\psi$ abhängige Steuersignale für die Antriebseinheit (7) generiert, und
die Antriebseinheit (7) Ströme für die Statorspulen des Elektromotors (8) erzeugt.

**Claims**

1. Sensor device for determining a first position $\phi_1$ of a rotor (1) of an electric machine, the electric machine comprising the rotor (1) and a stator (2) with stator coils, wherein the rotor (1) is a permanent magnet or a passive rotor, wherein the permanent magnet of the rotor (1) or a permanent magnet (4) rotating with the rotor (1) has a predetermined number $n_{rot1}$ of pole pairs, wherein the sensor device comprises a predetermined number r of magnetic sensors (S1, S2, S3) which detect the magnetic field generated by the rotor (1) or the permanent magnet (4) rotating with the rotor (1), and an electronic circuit, the electronic circuit being configured to determine the first position $\phi_1$ of the rotor (1) solely by the four following steps A-D:

A) detect and digitalize the sensor signals $a_1$ to $a_r$ and to form a signal vector $\vec{a} = (a_1,..., a_r)$,
B) form a measurement vector $\vec{q}$ according to a predetermined linear function g to $\vec{q} = g(\vec{a})$, wherein the measurement vector $\vec{q}$ comprises a number n of components, with $2 \le n \le r$,
C) calculate a vector $\vec{p} = M_{rot1} \cdot \vec{q}$, wherein $\vec{p}$ is a 2-component vector with the components $p_1$ and $p_2$ and $M_{rot1}$ is a 2 x n matrix, wherein the matrix $M_{rot1}$ depends on the number $n_{rot1}$, and
D) determine the first position $\phi_1$ to $\phi_1 = \text{atan2}(p_2, p_1)$.

2. Sensor device according to claim 1, further configured
to calculate a vector $\vec{x} = M_{rot2} \cdot \vec{q}$, wherein $\vec{x}$ is a 2-component vector with the components $x_1$ and $x_2$ and $M_{rot2}$ is a 2 x n matrix, and to determine a second position $\phi_2$ to $\phi_2 = \text{atan2}(x_2, x_1)$.

3. Sensor device according to claim 2, wherein the first position $\phi_1$ is an absolute position and the sensor device is further configured to redetermine the first position $\phi_1$ from the positions $\phi_1$ and $\phi_2$ to obtain the absolute position $\phi_1$ with a higher accuracy.

4. Sensor device according to claim 3, wherein the second position $\phi_2$ is an absolute position and the sensor device is further configured to redetermine the first position $\phi_2$ from the positions $\phi_1$ and $\phi_2$ to obtain the absolute position $\phi_2$ with a higher accuracy.

5. Sensor device according to any of claims 1 to 4, **characterized in that** the function $g(\vec{a})$ is one of the following functions:

1) $g(\vec{a}) = \vec{a}$,
2)
$$g(\vec{a}) = \vec{a} - \vec{a}_0,$$
3)
$$g(\vec{a}) = P \cdot \vec{a},$$
or
4)
$$g(\vec{a}) = P \cdot (\vec{a} - \vec{a}_0),$$

wherein $\vec{a}_0$ designates an offset vector and P a projection matrix.

6. Sensor device according to any of claims 1 to 5, **characterized in that** the electrical machine is a synchronous motor, asynchronous motor, alternating current motor, stepping motor or electric generator.

7. Sensor device according to any of claims 1 to 6, **characterized in that** the electrical machine is a flat motor.

8. Sensor device according to any of claims 1 to 7, **characterized in that** the magnetic sensors are Hall sensors or magnetoresistive sensors (AMR, GMR, TMR) and arranged on a common substrate.

9. Sensor device according to any of claims 1 to 8, further configured to determine a position $\psi$ of the stator rotational field of the electrical machine, for which it is configured

   to calculate a vector $\vec{y} = M_{stat} \cdot \vec{q}$, wherein $\vec{y}$ is a 2-component vector with the components $y_1$ and $y_2$ and $M_{stat}$ is a 2 x n matrix, and
   to determine the position $\psi$ of the stator rotational field to $\psi = atan2(y_2, y_1)$.

10. Control device for an electric motor (8) which comprises a rotor (1) and a stator (2), comprising
    a sensor device (10) according to any of claims 1 to 8,
    a motor controller (6), and
    a drive unit (7), wherein
    the first position $\phi_1$ of the rotor (1) of the electric motor (8) determined by the sensor device (10) is fed to the motor controller (6),
    the motor controller (6) generates control signals dependent on the first position $\phi_1$ for the drive unit (7), and
    the drive unit (7) generates currents for the stator coils of the electric motor (8).

11. Control device for an electric motor (8) which comprises a rotor (1) and a stator (2), comprising
    a sensor device (10) according claim 9,
    a motor controller (6), and
    a drive unit (7), wherein
    the first position $\phi_1$ of the rotor and the position $\psi$ of the stator rotational field of the electric motor (8) determined by the sensor device are fed to the motor controller (6),
    the motor controller (6) generates control signals dependent on the positions $\phi_1$ and $\psi$ for the drive unit (7), and
    the drive unit (7) generates currents for the stator coils of the electric motor (8).

## Revendications

1. Dispositif de capteur pour déterminer une première position $\phi_1$ d'un rotor (1) d'une machine électrique, la machine électrique comprenant le rotor (1) et un stator (2) avec des bobines de stator, dans lequel le rotor (1) est un aimant permanent ou un rotor passif, dans lequel l'aimant permanent du rotor (1) ou un aimant permanent (4) tournant avec le rotor (1) comprend un nombre prédéterminé $n_{rot1}$ de paires de pôles, dans lequel le dispositif de capteur comprend un nombre prédéterminé r de capteurs magnétiques (S1, S2, S3) qui détectent le champ magnétique généré par le rotor (1) ou l'aimant permanent (4) tournant avec le rotor (1), et un circuit électronique, le circuit électronique étant configuré pour déterminer la première position $\phi_1$ du rotor (1) uniquement par les quatre étapes suivantes A-D :

   A) acquiser et numériser les signaux de capteur $a_1$ à $a_r$ et former un vecteur de signal $\vec{a} = (a_1,..., a_r)$,
   B) former un vecteur de mesure $\vec{q}$ selon une fonction linéaire prédéterminée g à $\vec{q} = g(\vec{a})$, où le vecteur de mesure $\vec{q}$ comporte un nombre de n composantes, avec $2 \le n \le r$,
   C) calculer un vecteur $\vec{p} = M_{rot1} \cdot \vec{q}$, où $\vec{p}$ est un vecteur à deux composantes comprenant les composantes $p_1$ et $p_2$ et $M_{rot1}$ est une matrice 2 x n, où la matrice $M_{rot1}$ depend du nombre $n_{rot1}$, et
   D) déterminer la première position $\phi_1$ à $\phi_1 = atan2(p_2, p_1)$.

2. Dispositif de capteur selon la revendication 1, qui est en outre configuré pour

   calculer un vecteur $\vec{x} = M_{rot2} \cdot \vec{q}$, où $\vec{x}$ est un vecteur à deux composantes comprenant les composantes $x_1$ et $x_2$ et $M_{rot2}$ est une matrice 2 x n, et
   déterminer une deuxième position $\phi_2$ à $\phi_2 = atan2(x_2, x_1)$.

3. Dispositif de capteur selon la revendication 2, dans lequel la première position $\phi_1$ est une position absolue et le dispositif de capteur est en outre configuré pour redéterminer la première position $\phi_1$ à partir des positions $\phi_1$ et $\phi_2$ pour obtenir la position absolue $\phi_1$ avec une plus grande précision.

4. Dispositif de capteur selon la revendication 2, dans lequel la deuxième position $\phi_2$ est une position absolue et le dispositif de capteur est en outre configuré pour redéterminer la deuxième position $\phi_2$ à partir des positions $\phi_1$ et $\phi_2$ pour obtenir la position absolue

$\phi_2$ avec une plus grande précision.

**5.** Dispositif de capteur selon l'une des revendications 1 à 4, **caractérisé en ce que** la fonction $g(\vec{a})$ est l'une des fonctions suivantes :

*1)* $g(\vec{a}) = \vec{a},$
2)

$$g(\vec{a}) = \vec{a} - \vec{a}_0,$$

3)

$$g(\vec{a}) = P \cdot \vec{a},$$

ou
4)

$$g(\vec{a}) = P \cdot (\vec{a} - \vec{a}_0),$$

où $\vec{a}_0$ désigne un vecteur de décalage et P une matrice de projection.

**6.** Dispositif de capteur selon l'une des revendications 1 à 5, **caractérisé en ce que** la machine électrique est un moteur synchrone, asynchrone, à courant alternatif ou pas à pas ou un générateur.

**7.** Dispositif de capteur selon l'une des revendications 1 à 6, **caractérisé en ce que** la machine électrique est un moteur plat.

**8.** Dispositif de capteur selon l'une des revendications 1 à 7, **caractérisé en ce que** les capteurs magnétiques sont des capteurs à effet Hall ou des capteurs magnétorésistifs (AMR, GMR, TMR) et sont disposés sur un substrat commun.

**9.** Dispositif de capteur selon l'une des revendications 1 à 8, dans lequel le dispositif de capteur est en outre configuré pour déterminer une position $\psi$ du champ de rotation du stator de la machine électrique, pour quoi il est configuré pour

calculer un vecteur $\vec{y} = M_{stat} \cdot \vec{q}$, où $\vec{y}$ est un vecteur à deux composantes comprenant les composantes $y_1$ et $y_2$ et $M_{stat}$ est une matrice 2 x n, et
déterminer la position $\psi$ du champ de rotation du stator à $\psi = atan2(y_2, y_1)$.

**10.** Dispositif de commande pour un moteur électrique (8) comprenant un rotor (1) et un stator (2), comprenant

un dispositif de capteur (10) selon l'une des revendications 1 à 8,
un contrôleur de moteur (6), et
une unité d'entraînement (7), où
la première position $\phi_1$ du rotor (1) du moteur électrique (8) déterminée par le dispositif de capteur (10) est transmise au contrôleur de moteur (6),
le contrôleur de moteur (6) génère des signaux de commande pour l'unité d'entraînement (7) en fonction de la première position $\phi_1$, et
l'unité d'entraînement (7) génère des courants pour les bobines du stator du moteur électrique (8).

**11.** Dispositif de commande pour un moteur électrique (8) comprenant un rotor (1) et un stator (2), comprenant

un dispositif de capteur (10) selon la revendication 9,
un contrôleur de moteur (6), et
une unité d'entraînement (7), où
la première position $\phi_1$ du rotor déterminée avec le dispositif de capteur et la position $\psi$ du champ de rotation du stator du moteur électrique (8) sont transmises au contrôleur de moteur (6),
le contrôleur de moteur (6) génère des signaux de commande pour l'unité d'entraînement (7) en fonction des positions $\phi_1$ et $\psi$, et
l'unité d'entraînement (7) génère des courants pour les bobines du stator du moteur électrique (8).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150048242 A
- DE 10034733
- CH 120716
- EP 17167135